# EUROPÄISCHE PATENTSCHRIFT

(11) **EP 2 511 430 B1**
(45) Veröffentlichungstag und Bekanntmachung des Hinweises auf die Patenterteilung: **30.10.2013**
(21) Anmeldenummer: 12161634.6
(22) Anmeldetag: 28.03.2012
(51) Int. Cl.: E02D 27/42, E02D 27/52

(54) **Stahlkonstruktion für Offshore-Bauwerke**
steel tubes for offshore structures
Pieux d'acier pour l'usage off-shore

(30) Priorität: 11.04.2011 DE 102011007104
(43) Veröffentlichungstag der Anmeldung: 17.10.2012
(73) Patentinhaber: Evonik Degussa GmbH, 45128 Essen (DE); Salzgitter Mannesmann Line Pipe Gmbh, 57074 Siegen (DE)
(72) Erfinder: Hartmann, Markus, 48324 Sendenhorst (DE); Behrens, Claudia, 58313 Herdecke (DE); Beuth, Reinhard, 45772 Marl (DE); Winkels, Jörn, 59457 Werl (DE); Kocks, Hans-Jürgen, 57258 Freudenberg (DE); Thannbichler, Konrad, 57072 Siegen (DE)

(56) Entgegenhaltungen:
- WO-A1-2010/094528
- DE-A1- 10 117 113

## Beschreibung

Die Erfindung betrifft die Verwendung von Stahlkonstruktionsrohren, die mit einer extrudierten Schicht aus einer Polyamidformmasse umhüllt sind, in der Gründungsstruktur von Offshore-Bauwerken.

Als Offshore-Bauwerk werden feststehende Bauwerke bezeichnet, die in der offenen See vor der Küste errichtet werden. Beispiele für derartige Offshore-Bauwerke sind Windenergieanlagen, Bohrinseln und Leuchttürme. Rohrleitungen bzw. Pipelines sind keine Offshore-Bauwerke im Sinne der Erfindung. Die DE-10117113 A1 offenbart eine Verwendung nach dem Oberbegriff des Anspruchs 1.

Die Gründungsstruktur von Offshore-Bauwerken ist der Bereich, der die eigentliche Funktionseinheit trägt. Bei Windenergieanlagen trägt die Gründungsstruktur den Turm einschließlich Turbine und Rotoren. Bei Bohrinseln trägt die Gründungsstruktur die Plattform einschließlich Aufbauten. Bei Leuchttürmen trägt die Gründungsstruktur den Turm, soweit vorhanden, sowie das Feuer. Die Gründungsstruktur liegt unter Wasser, in der Wechselwasserzone, in der Gischtzone sowie gegebenenfalls in der Aerosolzone. Die Gründungsstruktur schließt die Gründungselemente ein, mit denen sie im Meeresboden verankert ist.

Im Zuge des geplanten Ausbaus der Windenergienutzung ist für die kommenden Jahre sowohl in der Nordsee als auch in anderen Meeren sowie Binnenseen eine Vielzahl von Offshore-Windenergieanlagen geplant. Das mechanische Gesamtsystem einer Offshore-Windenergieanlage besteht aus den Komponenten Turbine, Rotoren, Turm und Gründungsstruktur.

Zur Gründung dieser Anlagen auf dem Boden des Gewässers, an Standorten bis über 100 km von der Küste entfernt, sind spezielle Konstruktionen erforderlich, die von den Konstruktionen im Onshore-Bereich stark abweichen. Teilbereiche dieser aufwendigen Konstruktionen, wie z. B. Monopiles, Jackets, Tripods, Tripiles etc., sind hohen statischen und vor allem dynamischen sowie korrosiven Belastungen ausgesetzt. Je nach Lage und Wassertiefe am jeweils betrachteten Standort sind die sogenannte 50-Jahres-Welle sowie der Tidenhub zu berücksichtigen. Hinzu kommen starke UV-Strahlung, salziges Spritzwasser, Gischt, Aerosole, Temperaturwechsel, mechanische Belastungen, Bewuchs mit Muscheln und anderen Lebewesen und damit zusammenhängender mechanischer Abtrag durch Tiere sowie chemischer Abtrag durch Sekretabsonderungen von Tieren und anderen Meereslebewesen. Für diese Konstruktionen werden Stahlrohre eingesetzt, die aus Korrosionsschutzgründen entweder luftdicht abgeschlossen oder mit Beton ausgefüllt sein können. Darüber hinaus können Strom- oder sonstige Versorgungsleitungen durch die Stahlkonstruktionsrohre verlaufen.

Bisher werden die zur Konstruktion notwendigen Stahlrohre mit wesentlich dickeren Wandstärken (bis zu 25 %) als unmittelbar nötig ausgelegt und es kommen hier konventionelle Lacke, meistens auf Epoxidharzbasis oder Polyurethanbasis, für den Korrosionsschutz zum Einsatz. Einen besonderen Schutz gegen mechanische Belastungen bieten diese Lacksysteme im Regelfall nicht.

Aus der WO 2009/027429 ist die Verwendung eines metallischen Leitungsrohres, dessen Oberfläche mit einer Polyamidschicht umhüllt ist, zur Herstellung einer grabenlos bzw. sandbettfrei verlegten Rohrleitung bekannt. Die WO 2010/094528 offenbart die Verwendung eines metallischen Leitungsrohrs, das mit einer extrudierten Schicht aus einer Polyamidformmasse umhüllt ist, zur Herstellung einer im Wasser verlegten Rohrleitung. In beiden Fällen wirkt jedoch auf die Rohrleitung nicht die Kombination von mechanischen, korrosiven und UV-Belastungen ein, die bei der vorliegenden Erfindung typisch ist und z. B. starken Wellenschlag einschließt.

Der Erfindung liegt die Aufgabe zugrunde, Stahlkonstruktionsrohre für die Gründungsstruktur von Offshore-Bauwerken bereitzustellen, die einen besseren Schutz gegen mechanische Belastungen sowie gegen Korrosion und UV-Bestrahlung bieten als die bisher bekannten einschlägigen Rohre.

Diese und weitere aus den Anmeldungsunterlagen ersichtlichen Aufgaben werden durch die Verwendung eines Stahlrohres, das mit einer extrudierten Schicht aus einer Polyamidformmasse umhüllt ist, zum Einbau in die Gründungsstruktur eines Offshore-Bauwerks gelöst.

Das Offshore-Bauwerk ist vorzugsweise eine Offshore-Windenergieanlage, eine Bohrinsel oder ein Leuchtturm.

Die Gründungsstruktur einer Offshore-Windenergieanlage ist die Struktur, die den Turm trägt. Sie erstreckt sich von den Gründungselementen, die im Meeresboden verankert sind, über die Struktur, die sich unter Wasser befindet, bis zu der Stelle, an der der Turm ansetzt und die sich oberhalb des Ruhewasserspiegels befinden kann.

Als Gründungsstruktur werden beispielsweise folgende Typen verwendet:

Die Monopile-Konstruktion besteht aus einem zylindrischen hohlen Pfahl. Das Monopile wird in vielen europäischen Offshore-Windparks in Küstennähe verwendet; es eignet sich für Fundamente in Wassertiefen bis zu etwa 20 Metern. Monopiles können einfach und schnell installiert werden; für die Errichtung werden jedoch schwere Rammgeräte benötigt.

Das Jacket ist eine Fachwerkskonstruktion aus Stahl, die der Konstruktion von üblichen Strommasten ähnelt. An seinen vier Füßen wird das Jacket mit Pfählen im Meeresboden verankert. Die Jacketkonstruktion hat sich bereits in der Ölindustrie in größeren Wassertiefen bewährt. Durch die Fachwerkskonstruktion lassen sich gegenüber dem Monopile 40 bis 50 % Stahl einsparen. So steigen die Projektkosten beim Einsatz dieser Konstruktion in größeren Wassertiefen nur relativ gering an. Da die einzelnen Bauelemente relativ klein sind, lassen sie sich leicht produzieren und können einfach transportiert und montiert werden.

Beim Tripod besteht die Struktur aus einem aus Stahlrohren gebildeten Dreibein, auf dem das Zentralrohr zentrisch aufgesetzt wird. Die Beine des Dreibeins können auf je einem Pfahl oder auch auf mehreren aufsitzen. Zur Pfahlrammung sind an den Eckpunkten des sich ergebenden gleichseitigen Dreiecks Zentrierhülsen angeordnet. Die Pfähle sind untereinander durch horizontale Streben verbunden und an das Zentralrohr über diagonale Abstrebungen angeschlossen. Das Zentralrohr bindet nicht in den Meeresboden ein. Da hier Stahlrohre mit kleineren Durchmessern verwendet werden, kann das Tripod für Wassertiefen von mehr als 20 Metern eingesetzt werden.

Beim Quadropod handelt es sich um eine Modifikation des Tripod-Konzepts mit vier statt drei Verstrebungen. Hierbei wird eine erhöhte Gründungssteifigkeit bei großen Wassertiefen erzielt.

Das Tripile besteht aus drei Stahlpfeilern, die unter Wasser verankert werden. Über Wasser wird auf diesen Stahlpfeilern eine Dreibeinkonstruktion aufgesetzt. Nach Herstellerangaben sind Tripile-Fundamente für Wassertiefen von 25 bis zu 50 Metern geeignet.

Derartige Konstruktionen werden beispielsweise in folgenden Publikationen beschrieben:
- Fundamente für Offshore-Windenergieanlagen, Deutsche Energie-Agentur GmbH, Stand 12/09;
- Florian Biehl, Kollisionssicherheit von Offshore-Windenergieanlagen, Stahlbau, Band 78 (6), S. 402 - 409 (2009);
- K. Lesny, W. Richwien (Herausgeber), Gründung von Offshore-Windenergieanlagen - Werkzeuge für Planung und Bemessung, VGE Verlag Glückauf 2008, ISBN: 978-3-86797-035-8;
- DE 103 10 708 A1.

Das erfindungsgemäß verwendbare Polyamid ist herstellbar aus einer Kombination von Diamin und Dicarbonsäure, aus einer ω-Aminocarbonsäure oder dem entsprechenden Lactam. Grundsätzlich kann jedes Polyamid verwendet werden, beispielsweise PA46, PA6, PA66 oder Copolyamide auf dieser Basis mit Einheiten, die sich von Terephthalsäure und/oder Isophthalsäure herleiten (im Allgemeinen als PPA bezeichnet). In einer bevorzugten Ausführungsform enthalten die Monomereinheiten im Mittel mindestens 8, mindestens 9 bzw. mindestens 10 C-Atome. Bei Gemischen von Lactamen wird hier das arithmetische Mittel betrachtet. Bei einer Kombination von Diamin und Dicarbonsäure muss das arithmetische Mittel der C-Atome von Diamin und Dicarbonsäure in dieser bevorzugten Ausführungsform mindestens 8, mindestens 9 bzw. mindestens 10 betragen. Geeignete Polyamide sind beispielsweise: PA610 (herstellbar aus Hexamethylendiamin [6 C-Atome] und Sebacinsäure [10 C-Atome], das Mittel der C-Atome in den Monomereinheiten beträgt hier somit 8), PA88 (herstellbar aus Octamethylendiamin und 1.8-Octandisäure), PA8 (herstellbar aus Capryllactam), PA612, PA810, PA108, PA9, PA613, PA614, PA812, PA128, PA1010, PA10, PA814, PA148, PA1012, PA11, PA1014, PA1212 und PA12. Die Herstellung der Polyamide ist Stand der Technik. Selbstverständlich können auch hierauf basierende Copolyamide eingesetzt werden, wobei gegebenenfalls auch Monomere wie Caprolactam mit verwendet werden können.

Das Polyamid kann auch ein Polyetheresteramid oder ein Polyetheramid sein. Polyetheramide sind prinzipiell z. B. aus der DE-OS 30 06 961 bekannt. Sie enthalten als Comonomer ein Polyetherdiamin. Geeignete Polyetherdiamine sind durch Konversion der entsprechenden Polyetherdiole durch reduktive Aminierung oder Kupplung an Acrylnitril mit nachfolgender Hydrierung zugänglich (z. B. EP-A-0 434 244; EP-A-0 296 852). Sie besitzen in der Regel eine zahlenmittlere Molmasse von 230 bis 4000; ihr Anteil am Polyetheramid beträgt bevorzugt 5 bis 50 Gew.-%.

Kommerziell verfügbare Polyetherdiamine ausgehend von Propylenglykol sind als JEFFAMIN^{®} D-Typen bei der Fa. Huntsman kommerziell erhältlich. Grundsätzlich sind auch Polyetherdiamine ausgehend vom 1.4-Butandiol oder 1.3-Butandiol, oder gemischt aufgebaute Polyetherdiamine, etwa mit statistischer oder mit blockweiser Verteilung der von den Diolen herrührenden Einheiten, gut geeignet.

Ebenso können auch Mischungen verschiedener Polyamide, ausreichende Verträglichkeit vorausgesetzt, verwendet werden. Verträgliche Polyamidkombinationen sind dem Fachmann bekannt; beispielsweise seien hier die Kombinationen PA12/PA1012, PA12/PA1212, PA612/PA12, PA613/PA12, PA1014/PA12 und PA610/PA12 sowie entsprechende Kombinationen mit PA11 aufgeführt. Im Zweifelsfall können verträgliche Kombinationen durch Routineversuche ermittelt werden.

In einer bevorzugten Ausführungsform wird eine Mischung aus 30 bis 99 Gew.-%, besonders bevorzugt 40 bis 98 Gew.-% und insbesondere bevorzugt 50 bis 96 Gew.-% Polyamid im engeren Sinne sowie 1 bis 70 Gew.-%, besonders bevorzugt 2 bis 60 Gew.-% und insbesondere bevorzugt 4 bis 50 Gew.-% Polyetheresteramid und/oder Polyetheramid verwendet. Polyetheramide sind hierbei bevorzugt.

Neben Polyamid kann die Formmasse weitere Komponenten enthalten wie z.B. Schlagzähmodifikatoren, andere Thermoplaste, Weichmacher und andere übliche Zusatzstoffe. Erforderlich ist nur, dass das Polyamid die Matrix der Formmasse bildet.

Geeignete Schlagzähmodifikatoren sind beispielsweise Ethylen/α-Olefin-Copolymere, vorzugsweise ausgewählt aus
a) Ethylen/C₃- bis C₁₂-α-Olefin-Copolymeren mit 20 bis 96, bevorzugt 25 bis 85 Gew.-% Ethylen. Als C₃- bis C₁₂-α-Olefin wird beispielsweise Propen, 1-Buten, 1-Penten, 1-Hexen, 1-Octen, 1-Decen oder 1-Dodecen eingesetzt. Typische Beispiele hierfür sind Ethylen-Propylen-Kautschuk sowie LLDPE und VLDPE.
b) Ethylen/C₃- bis C₁₂-α-Olefin/unkonjugiertes Dien-Terpolymeren mit 20 bis 96, bevorzugt 25 bis 85 Gew.-% Ethylen und bis maximal etwa 10 Gew.-% eines unkonjugierten Diens wie Bicyclo(2.2.1)heptadien, Hexadien-1.4, Dicyclopentadien oder 5-Ethylidennorbornen. Als C₃- bis C₁₂-α-Olefin sind ebenfalls beispielsweise Propen, 1-Buten, 1-Penten, 1-Hexen, 1-Octen, 1-Decen oder 1-Dodecen geeignet.

Die Herstellung dieser Copolymere bzw. Terpolymere, beispielsweise mit Hilfe eines Ziegler-Natta-Katalysators, ist Stand der Technik.

Andere geeignete Schlagzähmodifikatoren sind Styrol-Ethylen/Butylen-Blockcopolymere. Hierbei werden vorzugsweise Styrol-Ethylen/Butylen-Styrol-Blockcopolymere (SEBS) eingesetzt, die durch Hydrierung von Styrol-Butadien-Styrol-Blockcopolymeren erhältlich sind. Es können aber auch Diblocksysteme (SEB) oder Multiblocksysteme verwendet werden. Derartige Blockcopolymere sind Stand der Technik.

Diese Schlagzähmodifikatoren enthalten vorzugsweise Säureanhydridgruppen, die auf bekannte Weise durch thermische oder radikalische Reaktion des Hauptkettenpolymers mit einem ungesättigten Dicarbonsäureanhydrid, einer ungesättigten Dicarbonsäure oder einem ungesättigten Dicarbonsäuremonoalkylester in einer Konzentration eingebracht werden, die für eine gute Anbindung an das Polyamid ausreicht. Geeignete Reagenzien sind beispielsweise Maleinsäure, Maleinsäureanhydrid, Maleinsäuremonobutylester, Fumarsäure, Citraconsäureanhydrid, Aconitsäure oder Itaconsäureanhydrid. Auf diese Weise sind vorzugsweise 0,1 bis 4 Gew.-% eines ungesättigten Anhydrids an den Schlagzähmodifikator aufgepfropft. Gemäß dem Stand der Technik kann das ungesättigte Dicarbonsäureanhydrid oder dessen Vorstufe auch zusammen mit einem weiteren ungesättigten Monomeren wie beispielsweise Styrol, α-Methylstyrol oder Inden aufgepfropft werden.

Andere geeignete Schlagzähmodifikatoren sind Copolymere, die Einheiten der folgenden Monomere enthalten:
a) 20 bis 94,5 Gew.-% eines oder mehrerer α-Olefine mit 2 bis 12 C-Atomen,
b) 5 bis 79,5 Gew.-% einer oder mehrerer acrylischer Verbindungen, ausgewählt aus
   - Acrylsäure bzw. Methacrylsäure bzw. deren Salzen,
   - Estern von Acrylsäure bzw. Methacrylsäure mit einem C1- bis C12-Alkohol, die gegebenenfalls eine freie Hydroxyl- oder Epoxidfunktion tragen können,
   - Acrylnitril bzw. Methacrylnitril,
   - Acrylamiden bzw. Methacrylamiden,
c) 0,5 bis 50 Gew.-% eines olefinisch ungesättigten Epoxids, Carbonsäureanhydrids, Carbonsäureimids, Oxazolins oder Oxazinons.

Diese Copolymere sind in der WO 2010/094528 näher beschrieben; die dortige Offenbarung ist in diese Anmeldung ausdrücklich einbezogen.

In einer bevorzugten Ausführungsform enthält die Polyamidformmasse hierbei folgende Komponenten:
1. 60 bis 96,5 Gew.-Teile Polyamid,
2. 3 bis 39,5 Gew.-Teile einer Schlagzähkomponente, die Säureanhydridgruppen enthält, wobei die Schlagzähkomponente ausgewählt ist aus Ethylen/a-Olefin-Copolymeren und Styrol-Ethylen/Butylen-Blockcopolymeren,
3. 0,5 bis 20 Gew.-Teile eines Copolymeren, das Einheiten der folgenden Monomere enthält:
   a) 20 bis 94,5 Gew.-% eines oder mehrerer α-Olefine mit 2 bis 12 C-Atomen,
   b) 5 bis 79,5 Gew.-% einer oder mehrerer acrylischer Verbindungen, ausgewählt aus
      - Acrylsäure bzw. Methacrylsäure bzw. deren Salzen,
      - Estern von Acrylsäure bzw. Methacrylsäure mit einem C₁- bis C₁₂-Alkohol, die gegebenenfalls eine freie Hydroxyl- oder Epoxidfunktion tragen können,
      - Acrylnitril bzw. Methacrylnitril,
      - Acrylamiden bzw. Methacrylamiden,
   c) 0,5 bis 50 Gew.-% eines olefinisch ungesättigten Epoxids, Carbonsäureanhydrids, Carbonsäureimids, Oxazolins oder Oxazinons,
wobei die Summe der Gewichtsteile der Komponenten gemäß 1., 2. und 3. 100 beträgt.

In einer weiteren bevorzugten Ausführungsform enthält die Formmasse hierbei:
1. 65 bis 90 Gew.-Teile und besonders bevorzugt 70 bis 85 Gew.-Teile Polyamid,
2. 5 bis 30 Gew.-Teile, besonders bevorzugt 6 bis 25 Gew.-Teile und insbesondere bevorzugt 7 bis 20 Gew.-Teile der Schlagzähkomponente,
3. 0,6 bis 15 Gew.-Teile und besonders bevorzugt 0,7 bis 10 Gew.-Teile des Copolymeren, welches bevorzugt Einheiten der folgenden Monomere enthält:
   a) 30 bis 80 Gew.-% α-Olefin(e),
   b) 7 bis 70 Gew.-% und besonders bevorzugt 10 bis 60 Gew.-% der acrylischen Verbindung(en),
   c) 1 bis 40 Gew.-% und besonders bevorzugt 5 bis 30 Gew.-% des olefinisch ungesättigten Epoxids, Carbonsäureanhydrids, Carbonsäureimids, Oxazolins oder Oxazinons.

Als Schlagzähkomponente kann darüber hinaus auch Nitrilkautschuk (NBR) oder hydrierter Nitrilkautschuk (H-NBR), die gegebenenfalls funktionelle Gruppen enthalten, verwendet werden. Entsprechende Formmassen sind in der US2003/0220449A1 beschrieben.

Andere Thermoplaste, die in der Polyamidformmasse enthalten sein können, sind in erster Linie Polyolefine. Sie können in einer Ausführungsform, wie weiter oben bei den Schlagzähmodifikatoren beschrieben, Säureanhydridgruppen enthalten und dann gegebenenfalls zusammen mit einem unfunktionalisierten Schlagzähmodifikator vorliegen. In einer weiteren Ausführungsform sind sie nicht funktionalisiert und liegen in der Formmasse in Kombination mit einem funktionalisierten Schlagzähmodifikator oder einem funktionalisierten Polyolefin vor. Der Begriff "funktionalisiert" bedeutet, dass die Polymere gemäß dem Stand der Technik mit Gruppen versehen sind, die mit den Polyamid-Endgruppen reagieren können, z. B. Säureanhydridgruppen, Carboxylgruppen, Epoxidgruppen oder Oxazolingruppen. Hierbei sind folgende Zusammensetzungen bevorzugt:
1. 50 bis 95 Gew.-Teile Polyamid,
2. 1 bis 49 Gew.-Teile funktionalisiertes oder unfunktionalisiertes Polyolefin sowie
3. 1 bis 49 Gew.-Teile funktionalisierter oder unfunktionalisierter Schlagzähmodifikator,
wobei die Summe der Gewichtsteile der Komponenten gemäß 1., 2. und 3. 100 beträgt.

Beim Polyolefin handelt es sich beispielsweise um Polyethylen oder um Polypropylen. Grundsätzlich kann jeder handelsübliche Typ eingesetzt werden. So kommen beispielsweise in Frage: Lineares Polyethylen hoher, mittlerer oder niedriger Dichte, LDPE, Ethylen-Acrylester-Copolymere, Ethylen-VinylacetatCopolymere, isotaktisches oder ataktisches Homopolypropylen, Randomcopolymere von Propen mit Ethen und/oder Buten-1, Ethylen-Propylen-Blockcopolymere und dergleichen mehr. Das Polyolefin kann nach jedem bekannten Verfahren hergestellt werden, beispielsweise nach Ziegler-Natta, nach dem Phillips-Verfahren, mittels Metallocenen oder radikalisch. Das Polyamid kann in diesem Fall auch beispielsweise PA6 und/oder PA66 sein.

In einer möglichen Ausführungsform enthält die Formmasse 1 bis 25 Gew.-% Weichmacher, besonders bevorzugt 2 bis 20 Gew.-% und insbesondere bevorzugt 3 bis 15 Gew.-%.

Weichmacher und ihr Einsatz bei Polyamiden sind bekannt. Eine allgemeine Übersicht über Weichmacher, die für Polyamide geeignet sind, kann Gächter/Müller, Kunststoffadditive, C. Hanser Verlag, 2. Ausgabe, S. 296 entnommen werden. Als Weichmacher geeignete, übliche Verbindungen sind z. B. Ester der p-Hydroxybenzoesäure mit 2 bis 20 C-Atomen in der Alkoholkomponente oder Amide von Arylsulfonsäuren mit 2 bis 12 C-Atomen in der Aminkomponente, bevorzugt Amide der Benzolsulfonsäure. Als Weichmacher kommen u. a. p-Hydroxybenzoesäureethylester, p-Hydroxybenzoesäureoctylester, p-Hydroxybenzoesäure-i-hexadecylester, Toluolsulfonsäure-n-octylamid, Benzolsulfonsäure-n-butylamid oder Benzolsulfonsäure-2-ethylhexylamid infrage.

Darüber hinaus kann die Formmasse noch übliche Mengen von Zusatzstoffen enthalten, die zum Einstellen bestimmter Eigenschaften benötigt werden. Beispiele hierfür sind Pigmente bzw. Füllstoffe wie Ruß, Titandioxid, Zinksulfid, Silikate oder Carbonate, Verstärkungsfasern wie z.B. Glasfasern, Verarbeitungshilfsmittel wie Wachse, Zinkstearat oder Calciumstearat, Flammschutzmittel wie Magnesiumhydroxid, Aluminiumhydroxid oder Melamincyanurat, Antioxidantien, UV-Stabilisatoren, Hydrolysestabilisatoren sowie Zusätze, die dem Produkt antielektrostatische Eigenschaften oder eine elektrische Leitfähigkeit verleihen wie z. B. Kohlenstofffasern, Graphitfibrillen, Fasern aus rostfreiem Stahl bzw. Leitfähigkeitsruß. Vorzugsweise enthält die Polyamidformmasse 0,01 bis 3 Gew.-% Ruß zur Verbesserung der UV-Stabilität sowie Biozide zur Reduzierung von Muschelbefall und sonstigem maritimem Bewuchs.

Eine gute mechanische Widerstandsfähigkeit der Polyamidumhüllung wird insbesondere dann erhalten, wenn die Viskosität der aufgebrachten Polyamidformmasse bei 240 °C und einer Schergeschwindigkeit von 0,1 1/s mindestens 2000 Pa.s, bevorzugt mindestens 2300 Pa.s, besonders bevorzugt mindestens 3000 Pa.s, insbesondere bevorzugt mindestens 5000 Pa.s und ganz besonders bevorzugt mindestens 8000 Pa.s beträgt. Die Viskosität wird in einem Kegel-Platte-Viskosimeter gemäß ASTM D 4440-3 bestimmt.

Eine hohe Viskosität der Polyamidformmasse geht in der Regel mit einem hohen Molekulargewicht des Polyamids einher. Ein Maß für das Molekulargewicht des Polyamids ist die Lösungsviskosität. Im Rahmen der Erfindung ist bevorzugt, dass die relative Lösungsviskosität ηᵣₑₗ des Polyamids in der aufgebrachten Formmasse, gemessen in einer 0,5 gew.-%igen Lösung in m-Kresol bei 23 °C gemäß ISO 307, mindestens 1,5, besonders bevorzugt mindestens 1,8, insbesondere bevorzugt mindestens 2,0 und ganz besonders bevorzugt mindestens 2,2 beträgt.

Ein bekanntes Verfahren zur Herstellung solcher Polyamide ist die Festphasennachkondensation von granulierten niederviskosen Polyamiden zu hochviskosem Polyamid bei einer Temperatur, die niedriger ist als die Schmelztemperatur. Das Verfahren wird beispielsweise in der CH 359 286 sowie der US 3 821 171 beschrieben. Normalerweise wird die Festphasennachkondensation von Polyamiden in einem diskontinuierlich oder kontinuierlich arbeitenden Trockner unter Inertgas oder Vakuum durchgeführt. Diese Methode erlaubt die Herstellung von Polyamiden mit sehr hohem Molekulargewicht.
Eine andere Möglichkeit zur Herstellung von hochviskosen Polyamiden ist die kontinuierliche Nachkondensation in der Schmelze unter Einsatz verschiedenartiger Schneckenapparaturen.

Die WO 2006/079890 gibt an, dass hochviskose Polyamidformmassen durch Mischen eines hochmolekularen Polyamids und eines niedermolekularen Polyamids erhalten werden können.

Darüber hinaus ist der Zugang zu hochviskosen Polyamiden bzw. Polyamidformmassen durch Einsatz aufbauender Additive möglich; geeignete Additive bzw. Verfahren sind beispielsweise in folgenden Schriften beschrieben: WO 98/47940, WO 96/34909, WO 01/66633, WO 03/066704, JP-A-01/197526, JP-A-01/236238, DE-B-24 58 733, EP-A-1 329 481, EP-A-1 518 901, EP-A-1 512 710, EP-A-1 690 889, EP-A-1 690 890 und WO 00/66650.

Die gemäß diesem Stand der Technik hergestellten Formmassen benötigen allerdings in der Regel bei der Extrusion eine sehr hohe Stromaufnahme bzw. ein sehr hohes Drehmoment und der Druck an der Düse ist sehr hoch. Darüber hinaus tritt bei den hohen Scherkräften eine wahrnehmbare Kettenspaltung auf, was zu einer Verringerung des Molekulargewichts bei der Verarbeitung führt.

Aus diesen Gründen ist es im Rahmen der Erfindung bevorzugt, dass die Polyamidformmasse erst während des Verarbeitungsvorgangs mit Hilfe eines das Molekulargewicht aufbauenden Additivs aufkondensiert wird. Gegenstand der Erfindung ist daher auch die anspruchsgemäße Verwendung eines Rohrs, wobei die extrudierte Schicht aus einer Polyamidformmasse mittels folgender Verfahrensschritte aufgebracht wurde:
a) Eine Polyamidformmasse wurde bereitgestellt;
b) eine Vormischung der Polyamidformmasse und des aufbauenden Additivs, beispielsweise einer Verbindung mit mindestens zwei Carbonateinheiten, wurde hergestellt,
c) die Mischung wurde gegebenenfalls gelagert und/oder transportiert und
d) die Mischung wurde anschließend zur Extrusion eingesetzt, wobei erst in diesem
Schritt die Aufkondensation erfolgte.

Es wurde festgestellt, dass bei dieser Zugabeweise während der Verarbeitung eine signifikante Erhöhung der Schmelzesteifigkeit eintritt, bei gleichzeitig geringer Motorlast. Somit können trotz hoher Schmelzeviskosität hohe Durchsätze bei der Verarbeitung erzielt werden, woraus eine Verbesserung der Wirtschaftlichkeit des Herstellverfahrens resultiert. Das Verfahren wird nachfolgend beispielhaft für den Fall beschrieben, bei dem das aufbauende Additiv eine Verbindung mit mindestens zwei Carbonateinheiten ist.

Bevorzugt hat das Ausgangspolyamid ein Molekulargewicht Mₙ von größer als 5000, insbesondere von größer als 8000. Hierbei werden Polyamide eingesetzt, deren Endgruppen zumindest teilweise als Aminogruppen vorliegen. Beispielsweise liegen mindestens 30 %, mindestens 40 %, mindestens 50 %, mindestens 60 %, mindestens 70 %, mindestens 80 % oder mindestens 90 % der Endgruppen als Aminoendgruppen vor. Die Herstellung von Polyamiden mit höherem Aminoendgruppengehalt unter Verwendung von Diaminen oder Polyaminen als Regler ist Stand der Technik. Im vorliegenden Fall wird bei der Herstellung des Polyamids bevorzugt ein aliphatisches, cycloaliphatisches oder araliphatisches Diamin mit 4 bis 44 C-Atomen als Regler eingesetzt. Geeignete Diamine sind beispielsweise Hexamethylendiamin, Decamethylendiamin, 2.2.4- bzw. 2.4.4-Trimethylhexamethylendiamin, Dodecamethylendiamin, 1.4-Diaminocyclohexan, 1.4-oder 1.3-Dimethylaminocyclohexan, 4.4'-Diaminodicyclohexylmethan, 4.4'-Diamino-3.3`-dimethyldicyclohexylmethan, 4.4`-Diaminodicyclohexylpropan, Isophorondiamin, Metaxylylendiamin oder Paraxylylendiamin.

In einer weiteren bevorzugten Ausführungsform wird bei der Herstellung des Polyamids ein Polyamin als Regler und gleichzeitig Verzweiger eingesetzt. Beispiele hierfür sind Diethylentriamin, 1.5-Diamino-3-(β-aminoethyl)pentan, Tris(2-aminoethyl)amin, N,N-Bis(2-aminoethyl)-N`,N`bis[2-[bis(2-aminoethyl)amino]-ethyl]-1,2-ethandiamin, Dendrimere sowie Polyethylenimine, insbesondere verzweigte Polyethylenimine, die durch Polymerisation von Aziridinen erhältlich sind (Houben-Weyl, Methoden der Organischen Chemie, Band E20, Seiten 1482 - 1487, Georg Thieme Verlag Stuttgart, 1987) und die in der Regel folgende Aminogruppenverteilung besitzen:
25 bis 46 % primäre Aminogruppen,
30 bis 45 % sekundäre Aminogruppen und
16 bis 40 % tertiäre Aminogruppen.

Die Verbindung mit mindestens zwei Carbonateinheiten wird in einem Mengenverhältnis von 0,005 bis 10 Gew.-% eingesetzt, berechnet im Verhältnis zum eingesetzten Polyamid. Vorzugsweise liegt dieses Verhältnis im Bereich von 0,01 bis 5,0 Gew.-%, besonders bevorzugt im Bereich von 0,05 bis 3 Gew.-%. Der Begriff "Carbonat" bedeutet hier Ester der Kohlensäure insbesondere mit Phenolen oder Alkoholen.

Die Verbindung mit mindestens zwei Carbonateinheiten kann niedermolekular, oligomer oder polymer sein. Sie kann vollständig aus Carbonateinheiten bestehen oder sie kann noch weitere Einheiten aufweisen. Diese sind vorzugsweise Oligo-oder Polyamid-, -ester-, -ether-, -etheresteramid- oder -etheramideinheiten. Solche Verbindungen können durch bekannte Oligo- oder Polymerisationsverfahren bzw. durch polymeranaloge Umsetzungen hergestellt werden.

In einer bevorzugten Ausführungsform handelt es sich bei der Verbindung mit mindestens zwei Carbonateinheiten um ein Polycarbonat, beispielsweise auf Basis von Bisphenol A, bzw. um ein Blockcopolymeres, das einen derartigen Polycarbonatblock enthält.

Die Eindosierung der als Additiv verwendeten Verbindung mit mindestens zwei Carbonateinheiten in Form eines Masterbatches ermöglicht eine genauere Dosierung des Additivs, da größere Mengen verwendet werden. Es stellte sich zudem heraus, dass durch die Verwendung eines Masterbatches eine verbesserte Extrudatqualität erzielt wird. Das Masterbatch umfasst als Matrixmaterial bevorzugt das Polyamid, das auch im erfindungsgemäßen Verfahren aufkondensiert wird, oder ein damit verträgliches Polyamid, jedoch können auch unverträgliche Polyamide unter den Reaktionsbedingungen eine partielle Anbindung an das aufzukondensierende Polyamid erfahren, was eine Kompatibilisierung bewirkt. Das als Matrixmaterial im Masterbatch verwendete Polyamid hat bevorzugt ein Molekulargewicht Mₙ von größer als 5000 und insbesondere von größer als 8000. Hierbei sind diejenigen Polyamide bevorzugt, deren Endgruppen überwiegend als Carbonsäuregruppen vorliegen. Beispielsweise liegen mindestens 80 %, mindestens 90 % oder mindestens 95 % der Endgruppen als Säuregruppen vor. Alternativ hierzu können Polyetheramide verwendet werden, deren Endgruppen überwiegend als Aminogruppen vorliegen. Auf diese Weise wird eine verbesserte Hydrolysebeständigkeit erzielt.

Die Konzentration der Verbindung mit mindestens zwei Carbonateinheiten im Masterbatch beträgt vorzugsweise 0,15 bis 50 Gew.-%, besonders bevorzugt 0,2 bis 25 Gew.-% und insbesondere bevorzugt 0,3 bis 15 Gew.-%. Die Herstellung eines solchen Masterbatches erfolgt in der üblichen, dem Fachmann bekannten Weise.

Geeignete Verbindungen mit mindestens zwei Carbonateinheiten sowie geeignete Masterbatches sind in der WO 00/66650, auf die hier ausdrücklich Bezug genommen wird, ausführlich beschrieben.

Die Erfindung ist anwendbar bei Polyamiden, die herstellungsbedingt mindestens 5 ppm Phosphor in Form einer sauren Verbindung enthalten. In diesem Fall wird der Polyamidformmasse vor der Compoundierung oder bei der Compoundierung 0,001 bis 10 Gew.-%, bezogen auf das Polyamid, eines Salzes einer schwachen Säure zugegeben. Geeignete Salze sind in der DE-A 103 37 707 offenbart, auf die hiermit ausdrücklich Bezug genommen wird.

Die Erfindung ist jedoch genauso gut anwendbar bei Polyamiden, die herstellungsbedingt weniger als 5 ppm Phosphor oder gar keinen Phosphor in Form einer sauren Verbindung enthalten. In diesem Fall kann zwar, muss aber nicht ein entsprechendes Salz einer schwachen Säure zugegeben werden.

Die Verbindung mit mindestens zwei Carbonateinheiten wird als solche oder als Masterbatch erst nach der Compoundierung, das heißt erst nach der Herstellung der Polyamidformmasse, aber spätestens während der Verarbeitung zugegeben. Bevorzugt mischt man bei der Verarbeitung das aufzukondensierende Polyamid bzw. die aufzukondensierende Polyamidformmasse als Granulat mit dem Granulat oder Pulver der Verbindung mit mindestens zwei Carbonateinheiten oder dem entsprechenden Masterbatch. Es kann aber auch eine Granulatmischung der fertig compoundierten Polyamidformmasse mit der Verbindung mit mindestens zwei Carbonateinheiten bzw. dem Masterbatch hergestellt, anschließend transportiert oder gelagert und danach verarbeitet werden. Entsprechend kann natürlich auch mit Pulvermischungen verfahren werden. Entscheidend ist, dass die Mischung erst bei der Verarbeitung aufgeschmolzen wird. Eine gründliche Vermischung der Schmelze bei der Verarbeitung ist empfehlenswert. Das Masterbatch kann genauso gut jedoch auch als Schmelzestrom mit Hilfe eines beigestellten Extruders in die Schmelze der zu verarbeitenden Polyamidformmasse zudosiert und dann gründlich eingemischt werden; die Verfahrensschritte b) und d) fallen dann zusammen.

Anstelle der Verbindung mit mindestens zwei Carbonateinheiten kann auch jedes andere geeignete aufbauende Additiv eingesetzt werden, beispielsweise eines, das in der obengenannten Literatur offenbart ist. Geeignete Mengenverhältnisse sind auch hier 0,005 bis 10 Gew.-%, berechnet im Verhältnis zum eingesetzten Polyamid, vorzugsweise 0,01 bis 5,0 Gew.-%, besonders bevorzugt 0,05 bis 3 Gew.-%.

Die aufgebrachte Polyamidschicht muss mindestens so dick sein, dass sie unter den Bedingungen der Aufbringung als geschlossene Schicht erzeugt werden kann. Vorzugsweise beträgt die Schichtdicke mindestens 0,5 mm, besonders bevorzugt mindestens 1,0 mm und insbesondere bevorzugt mindestens 1,2 mm.

Üblicherweise haben sich Schichtdicken bis etwa 8 mm, vorzugsweise bis etwa 7 mm, besonders bevorzugt bis etwa 6 mm und insbesondere bevorzugt bis etwa 5 mm bewährt. Bei Bedarf kann die Schicht jedoch auch dicker gewählt werden, beispielsweise bis 30 mm oder mehr.

Die Polyamidschicht kann direkt auf der Metalloberfläche aufgebracht sein. In diesem Fall ist es vorteilhaft, wenn die Polyamidformmasse ein Haftharz, beispielsweise Epoxidharz (etwa Araldit^{®}) enthält. Im Allgemeinen befindet sich aber zwischen der Metalloberfläche und der Polyamidschicht mindestens eine weitere Schicht. Beispielsweise kann es sich um folgende Schichten handeln:
- Eine Keramikschicht, beispielsweise gemäß WO 03/093374;
- eine Grundierungsschicht, beispielsweise aus Epoxidharz (US 5 580 659) oder einer wasserbasierenden Mischung aus Epoxidharz und Polyacrylatlatex (WO 00/04106);
- eine Haftvermittlerschicht aus einem Polyamidschmelzkleber, der beispielsweise als Pulver durch Sprühen etc. aufgebracht werden kann (EP 1 808 468 A2), oder aus einem Polyolefin, das funktionelle Gruppen trägt. Als funktionelle Gruppen kommen beispielsweise Carboxylgruppen oder Säureanhydridgruppen (WO 02/094922), Epoxygruppen oder Alkoxysilangruppen (EP-A-0 346 101) in Frage. Die Polyolefinschicht kann auch geschäumt sein. Das Polyolefin ist bevorzugt Polyethylen oder Polypropylen;
- ein anders zusammengesetzter Haftvermittler, der gewährleisten soll, dass bei mechanischer Beanspruchung der Verbund von Polyamidschicht und Grundmaterial nicht beeinträchtigt wird;
- eine textile Verstärkung in Form von Gewebe oder Matten, beispielsweise aus Glasfasern oder Aramidfasern (Kevlar).

Bevorzugte Schichtenanordnungen sind folgende:
Metall / Keramikschicht / Polyamidschicht;
Metall / Keramikschicht / Grundierungsschicht / Polyamidschicht;
Metall / Keramikschicht / Grundierungsschicht / Haftvermittler / Polyamidschicht; Metall / Grundierungsschicht / Polyamidschicht;
Metall / Grundierungsschicht / Haftvermittler / Polyamidschicht;
Metall / Grundierungsschicht / Polyolefinschicht / Polyamidschicht;
Metall / Grundierungsschicht / Haftvermittler / Polyolefinschicht / Polyamidschicht;
Metall / Grundierungsschicht / Haftvermittler / Polyolefinschicht / Haftvermittler / Polyamidschicht;
Metall / Haftvermittler / Polyamidschicht.

Eine eventuelle Keramikschicht, Grundierungsschicht und/oder Polyolefinschicht wird auf das Rohr nach jedem beliebigen Verfahren aufgebracht. Geeignete Verfahren sind Stand der Technik.

Die Polyamidschicht wird gemäß bekannter Verfahren, beispielsweise mittels Schlauch- oder Wickelextrusion, aufgebracht. In einer möglichen Variante kann die Polyamidschicht zusammen mit einer ebenfalls aufzubringenden Polyolefinschicht bzw. Haftvermittlerschicht durch Coextrusion eines Mehrschichtverbundes erzeugt und aufgebracht werden.

Die Schlauch- und die Wickelextrusion sind seit langem bewährte Umhüllungsverfahren für Rohre. Näher beschrieben werden diese Verfahren im Stahlrohr-Handbuch, 12. Auflage, S. 392-409, Vulkan-Verlag Essen, 1995.

Der Außendurchmesser des Metallrohrs beträgt vorzugsweise mindestens 20 mm und maximal 7000 mm.

Die einzelnen Rohre werden auf bekannte Weise konstruktiv miteinander verbunden, beispielsweise durch Schweißen.

Aufgrund der hohen mechanischen Festigkeit, der guten Abriebeigenschaften, der sehr hohen Kratzfestigkeit, der festen Haftung sowie der optimal gewählten Dicke und der hervorragenden Beständigkeit der aufgebrachten Polyamidschicht gegen die Einflüsse von Seewasser und Atmosphäre kann gemäß der Erfindung gleichzeitig sowohl ein guter Korrosionsschutz als auch ein guter Schutz gegen mechanische Einwirkungen gewährleistet werden.

Gegenstand der Erfindung ist auch die bei der anspruchsgemäßen Verwendung erhaltene Gründungsstruktur eines Offshore-Bauwerks, beispielsweise einer Offshore-Windenergieanlage. Diese erfindungsgemäße Gründungsstruktur zeichnet sich gegenüber denen des Standes der Technik durch eine deutlich verlängerte Lebensdauer aus, da zudem Beschichtungsfehler durch das Verfahren der Extrusionsbeschichtung deutlich reduziert werden.

## Patentansprüche

1. Verwendung eines Stahlrohres, das mit einer extrudierten Schicht aus einer Polyamidformmasse umhüllt ist, zum Einbau in die Gründungsstruktur eines Offshore-Bauwerks.

2. Verwendung gemäß Anspruch 1,
**dadurch gekennzeichnet,**
**dass** das Offshore-Bauwerk eine Offshore-Windenergieanlage, eine Bohrinsel oder ein Leuchtturm ist.

3. Verwendung gemäß einem der vorhergehenden Ansprüche,
**dadurch gekennzeichnet,**
**dass** die extrudierte Schicht aus einer Polyamidformmasse 0,5 bis 30 mm dick ist.

4. Verwendung gemäß einem der vorhergehenden Ansprüche,
**dadurch gekennzeichnet,**
**dass** sich zwischen dem metallischen Leitungsrohr und der Schicht aus der Polyamidformmasse eine oder mehrere weitere Schichten befinden, die ausgewählt sind aus der Gruppe
- Keramikschicht
- Grundierungsschicht
- Haftvermittlerschicht und
- textile Verstärkung in Form von Gewebe oder Matten.

5. Verwendung gemäß einem der vorhergehenden Ansprüche,
**dadurch gekennzeichnet,**
**dass** die Viskosität der extrudierten Polyamidformmasse bei 240 °C und einer Schergeschwindigkeit von 0,1 1/s gemäß ASTM D 4440-3 mindestens 2000 Pa·s beträgt.

6. Verwendung gemäß einem der vorhergehenden Ansprüche,
**dadurch gekennzeichnet,**
**dass** die relative Lösungsviskosität ηᵣₑₗ des Polyamids in der extrudierten Formmasse gemäß ISO 307 mindestens 1,5 beträgt.

7. Verwendung gemäß einem der vorhergehenden Ansprüche,
**dadurch gekennzeichnet,**
**dass** die extrudierte Schicht aus der Polyamidformmasse mittels folgender Verfahrensschritte aufgebracht wurde:
a) Eine Polyamidformmasse wurde bereitgestellt,
b) eine Vormischung der Polyamidformmasse und des aufbauenden Additivs wurde hergestellt
c) die Mischung wurde gegebenenfalls gelagert und/oder transportiert und
d) die Mischung wurde anschließend zur Extrusion eingesetzt, wobei erst in diesem Schritt die Aufkondensation erfolgte.

8. Verwendung gemäß einem der vorhergehenden Ansprüche,
**dadurch gekennzeichnet,**
**dass** das aufbauende Additiv eine Verbindung mit mindestens zwei Carbonateinheiten ist.

9. Verwendung gemäß einem der Ansprüche 2 bis 8,
**dadurch gekennzeichnet,**
**dass** das Offshore-Bauwerk eine Offshore-Windenergieanlage und die Gründungsstruktur ein Monopile, ein Jacket, ein Tripod, ein Quadropod oder ein Tripile ist.

10. Gründungstruktur eines Offshore-Bauwerks, erhalten gemäß einer Verwendung entsprechend einem vorhergehenden Anspruch.

## Claims

1. Use of a steel tube sheathed by an extruded layer made of a polyamide moulding composition, for incorporation into the foundation structure of an offshore structure.

2. Use according to Claim 1,
**characterized in that**
the offshore structure is an offshore wind energy system, a drilling platform or a lighthouse.

3. Use according to any of the preceding claims,
**characterized in that**
the extruded layer is composed of a polyamide moulding composition of thickness from 0.5 to 30 mm.

4. Use according to any of the preceding claims,
**characterized in that**
between the metallic pipe and the layer made of the polyamide moulding composition there is/are one or more further layers selected from the group of
- ceramic layer
- primer layer
- adhesion-promoter layer and
- textile reinforcement in the form of woven or mats.

5. Use according to any of the preceding claims, **characterized in that**
the viscosity of the extruded polyamide moulding composition at 240°C and at a shear rate of 0.1 1/s in accordance with ASTM D4440-3 is at least 2000 Pa·s.

6. Use according to any of the preceding claims,
**characterized in that**
the relative solution viscosity ηᵣₑₗ of the polyamide in the extruded moulding composition in accordance with ISO 307 is at least 1.5.

7. Use according to any of the preceding claims,
**characterized in that**
the extruded layer made of the polyamide moulding composition has been applied by means of the following process steps:
a)provision of a polyamide moulding composition,
b) production of a premix of the polyamide moulding composition and of the molecular-weight-increasing additive,
c) of appropriate, storage and/or transport of the mixture, and
d) then use of the mixture for the extrusion process, where the condensation process to increase molecular weight is delayed until this step has begun.

8. Use according to any of the preceding claims,
**characterized in that**
the molecular-weight-increasing additive is a compound having at least two carbonate units.

9. Use according to any of Claims 2 to 8,
**characterized in that**
the offshore structure is an offshore wind energy system and the foundation structure is a monopile, a jacket, a tripod, a quadropod or a tripile.

10. Foundation structure of an offshore structure, obtained according to a use corresponding to any preceding claim.

## Revendications

1. Utilisation d'un tube en acier, qui est enveloppé avec une couche extrudée d'un matériau de moulage polyamide, pour l'incorporation dans la structure de fondation d'un ouvrage au large.

2. Utilisation selon la revendication 1, **caractérisée en ce que** l'ouvrage au large est une installation éolienne au large, une plateforme de forage ou un phare.

3. Utilisation selon l'une quelconque des revendications précédentes, **caractérisée en ce que** la couche extrudée en un matériau de moulage polyamide présente une épaisseur de 0,5 à 30 mm.

4. Utilisation selon l'une quelconque des revendications précédentes, **caractérisée en ce qu'**une ou plusieurs couches supplémentaires choisies dans le groupe suivant :
- une couche céramique,
- une couche de fond,
- une couche de promoteur d'adhésion et
- un renfort textile sous la forme d'un tissu ou de mats,
se trouvent entre la conduite métallique et la couche en matériau de moulage polyamide.

5. Utilisation selon l'une quelconque des revendications précédentes, **caractérisée en ce que** la viscosité du matériau de moulage polyamide extrudé à 240 °C et à une vitesse de cisaillement de 0,1 1/s selon ASTM D 4440-3 est d'au moins 2 000 Pa·s.

6. Utilisation selon l'une quelconque des revendications précédentes, **caractérisée en ce que** la viscosité en solution relative ηᵣₑₗ du polyamide dans le matériau de moulage extrudé selon ISO 307 est d'au moins 1,5.

7. Utilisation selon l'une quelconque des revendications précédentes, **caractérisée en ce que** la couche extrudée en matériau de moulage polyamide a été appliquée par les étapes de procédé suivantes .
a) un matériau de moulage polyamide a été préparé,
b) un prémélange du matériau de moulage polyamide et de l'additif structurant a été fabriqué,
c) le mélange a éventuellement été stocké et/ou transporté, et
d) le mélange a ensuite été utilisé pour l'extrusion, la condensation n'ayant lieu que lors de cette étape.

8. Utilisation selon l'une quelconque des revendications précédentes, **caractérisée en ce que** l'additif structurant est un composé contenant au moins deux unités carbonate.

9. Utilisation selon l'une quelconque des revendications 2 à 8, **caractérisée en ce que** l'ouvrage au large est une installation éolienne au large et la structure de fondation est une monopile, un jacket, un tripode, un quadripode ou une tripile.

10. Structure de fondation d'un ouvrage au large, obtenue par une utilisation selon l'une quelconque des revendications précédentes.
